# EUROPEAN PATENT APPLICATION

(11) **EP 2 662 770 A1**
(43) Date of publication of application: **13.11.2013**
(21) Application number: 12305528.7
(22) Date of filing: 11.05.2012
(51) Int. Cl.: G06F 9/45

(54) **Method of optimizing an application**

(71) Applicant: Gemalto SA, 92190 Meudon (FR)
(72) Inventor: Delfin, Vincent Louie, 13705 LA CIOTAT (FR)

(57) **Abstract**

The invention is a method for optimizing an application having an executable part comprising a plurality of code sequences. The method comprises the steps of
- providing a usage profile reflecting the expected frequency of use of the code sequences,
- analyzing the usage profile and identifying a first set of code sequences which are the least used and a second set of code sequences that are most often used,
- generating an optimized application by optimizing the code sequences of said first set and setting the code sequences of said second set in a form that is not optimized.

## Description

### (Field of the invention)

The present invention relates to the methods of optimizing an application. It relates particularly to methods of optimizing applications intended to be stored and executed in devices which have limited memory or computing resources.

### (Background of the invention)

In order to reduce the size of an application, it is known to use code compression tools which reduce the size of the executable code of an application. This kind of tools allows saving memory. When the application is about to be run, the stored application must be uncompressed. This mechanism leads to an increase of the time required for running the application.

There is a need for enhancing the method for optimizing the application intended to be stored and executed in a device.

### (Summary of the Invention)

An object of the invention is to solve the above mentioned technical problem.

The object of the present invention is a method for optimizing an application having an executable part which comprises a plurality of code sequences. The method comprises the following steps:
- providing a usage profile which reflects the expected frequency of use of the plurality of code sequences,
- analyzing the usage profile and identifying a first set of code sequences which are the least used and a second set of code sequences that are most often used, and
- generating an optimized application by optimizing the code sequences of said first set and setting the code sequences of said second set in a form that is not optimized.

Advantageously, the method may comprise the further steps:
- installing the optimized application in a device,
- producing a dynamic usage profile by tracking the frequency of use of the code sequences during the application running in the device,
- analyzing the dynamic usage profile and identifying a third set of sequences which are the least used and a fourth set of sequences that are most often used,
- generating a new optimized application by optimizing the code sequences of said third set and setting the code sequences of said fourth set in a form that is not optimized,
- storing said new optimized application in the device.

Advantageously, the code sequence optimizing may be performed via a code sequence compressing or a code sequence compacting.

Advantageously, the dynamic usage profile may be produced by sampling the use of the plurality of code sequences.

Advantageously, the dynamic usage profile may be produced by tracking a subset of the plurality of code sequences.

Another object of the invention is a system comprising an application that has an executable part comprising a plurality of code sequences. The system comprises:
- a generator means adapted to generate a usage profile which is intended to reflect the expected frequency of use of said plurality of code sequences when the application is run,
- an identifying means adapted to analyze the usage profile and to identify a first set of code sequences which are the least used and a second set of code sequences that are most often used,
- an optimizer means adapted to generate an optimized application by optimizing the code sequences of said first set and setting the code sequences of said second set in a form that is not optimized.

Advantageously, the system may comprise:
- a tracking means adapted to produce a dynamic usage profile reflecting the frequency of use of the plurality of code sequences when the application is run,
- an analyzing means adapted to identify a set of code sequences which are the least used and a set of code sequences that that are most often used according to the dynamic usage profile, and
- a generating means adapted to generate a new optimized application by optimizing the code sequences of the set of code sequences to be optimized.

Another object of the invention is a device able to run an application having an executable part comprising a plurality of code sequences. The device comprises:
- a tracking means adapted to produce a dynamic usage profile reflecting the frequency of use of the plurality of code sequences when the application is run,
- an analyzing means adapted to analyze the dynamic usage profile and to identify a set of code sequences which are the least used and a set of code sequences that are most often used, and
- a generating means adapted to generate a new optimized application by optimizing the code sequences of the set of code sequences which are infrequently used and setting the code sequences of said set of code sequences that are often used in a form that is not optimized.

Advantageously, the device may comprise a manager means adapted to trigger the generating means when a preset event occurs.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a system comprising a computer machine providing a device with an optimized application according to the invention;
- Figure 2 depicts schematically an example of architecture of a device storing and executing an application according to the invention;
- Figure 3 illustrates an example of flowchart of method for optimizing an application in a static mode according to the invention;
- Figure 4 illustrates an example of flowchart of method for optimizing an application in a dynamic mode according to the invention; and
- Figure 5A, 5B and AC illustrate examples of a table for tracking use frequency of code sequences according to the invention.

### (Detailed description of the preferred embodiments)

The invention may apply to any types of application which are intended to be stored and run in a device. An application may be written in different types of languages and compiled into either an intermediate version or a directly executable version. An intermediate version is a version which is interpreted by a virtual machine (VM) like a Java VM for example. A directly executable version is a version which is directly executed by an operating system.

The invention applies to both intermediate version and directly executable version. In the following examples, the wording "executable part" means equally a part generated in an intermediate version and a part generated in a directly executable version.

The invention applies to any kind of devices intended to store and to run an application. For example, the invention may apply to a mobile phone, a personal digital assistant (PDA), a tablet PC or a smart card.

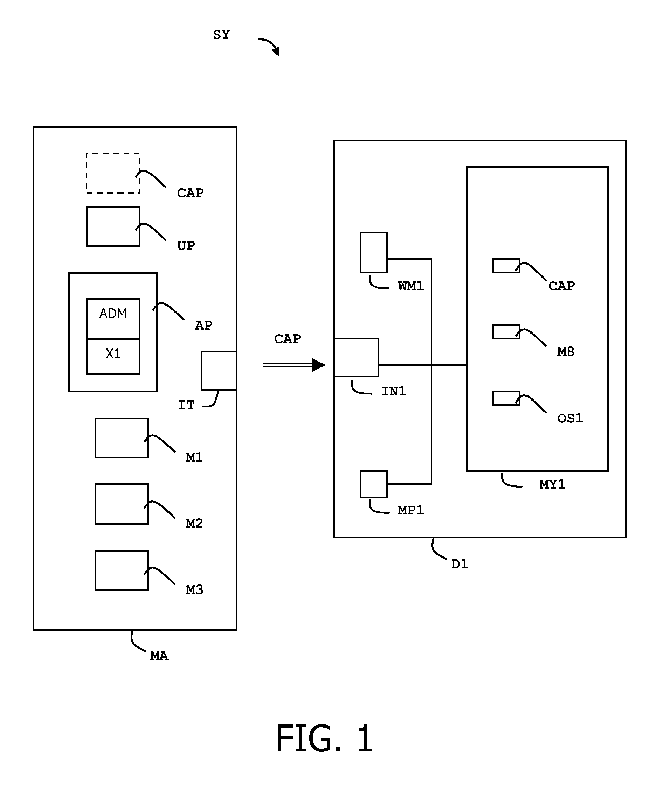

**Figure 1** shows an example of architecture of a system SY comprising a computer machine MA which provides a device D1 with an optimized application CAP according to the invention. In this example, the device D1 is a Universal Integrated Circuit Card (UICC).

The computer machine MA comprises a generator means M1, an identifying means M2, an optimizer means M3, an application AP and a communication interface IT. The machine MA is able to send data to the device D1 through the communication interface IT.

The application AP comprises and administrative part ADM and an executable part X1. For example the administrative part ADM may contain metadata like the application Identifier or the application name while the executable part X1 may be a Java bytecode. The executable part X1 comprises a plurality of executable code sequences. A code sequence is a series of consecutive bytes. A code sequence may be limited to only one byte.

The generator means M1 is adapted to generate a usage profile UP which is intended to reflect the expected frequency of use of the executable code sequences when the application AP will be run in the device D1.

The usage profile UP may be considered as an initial usage profile.

The generator means M1 may build the usage profile UP by running the application AP on a simulated operating system or a simulated virtual machine.

Alternatively, the usage profile UP may be built by the person (i.e. developer) who developed the application AP, based on forecasted statistic.

Alternatively, the usage profile UP may be built from a mission profile provided by the person who will exploit the device D1 or provided by a Marketing department.

The identifying means M2 is adapted to analyze the usage profile UP and to identify a first set of code sequences which must be optimized and a second set of code sequences that must remain unchanged. According to a principle of the invention, first set contains code sequences which are rarely executed while second set contains code sequences which are the most often executed.

The optimizer means M3 is adapted to generate an optimized application CAP by optimizing the code sequences of said first set and by setting the code sequences of said second set in a form that is not optimized. For example, the optimizer means M3 may identify, in said first set, a code sequence (also called pattern) which is repeated several times and assign a specific bytecode value to the found pattern. The specific bytecode is assumed to be shorter than the pattern. Thus by replacing the found pattern with a specific bytecode, the size of the executable part X1 is reduced. For instance, the range [0xB9 - 0xFE] is not defined by Javacard standard. The optimizer means M3 may select a specific bytecode in the range [0xB9 - 0xFE] for replacing a pattern made of several bytecodes which are not in this range.

Preferably both the usage profile UP and the optimized application CAP are stored in the computer machine MA.

The device D1 comprises a working memory WM1 of RAM (Random Access Memory) type, a non volatile memory MY1, a microprocessor MP1 and a communication interface IN1. The device D1 is able to receive data through the communication interface IN1 from the computer MA. The non volatile memory MY1 comprises an operating system OS1 and a decompressing means M8. The non volatile memory MY1 is intended to store the optimized application CAP provided by the computer machine MA.

The decompressing means M8 is adapted to decompress the optimized application CAP for generating the application AP by using the same convention as the optimizer means M3. Advantageously, the decompressing means M8 is able to decompress an isolated code sequence. Thus only the code sequences which are required for a given execution are decompressed.

In a preferred embodiment, the operating system OS1 comprises a Java Virtual Machine and the optimized application CAP corresponds to an applet.

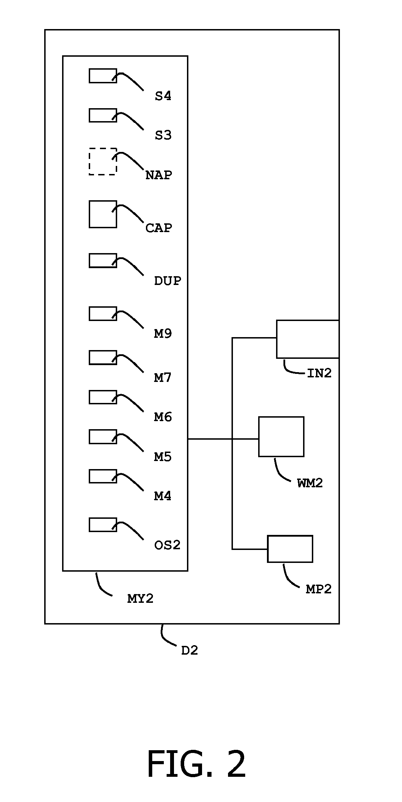

**Figure 2** shows an example of architecture of a device D2 able to optimize an application according to the dynamic mode of the invention.

The device D2 comprises a working memory WM2, a non volatile memory MY2, a microprocessor MP2 and a communication interface IN2. The device D2 is able to receive data through the communication interface IN2. The non volatile memory MY2 comprises an operating system OS2, a tracking means M4, an analyzing means M5, a generating means M6, a manager means M7 and a decompressing means M9.

The tracking means M4 is adapted to produce a dynamic usage profile DUP which reflects the frequency of use of the code sequences of the executable part X1 when the application AP is run.

The analyzing means M5 is adapted to analyze the dynamic usage profile DUP and to identify a set S3 of code sequences to be optimized and a set S4 of code sequences that must remain unchanged. The set S3 contains code sequences which are infrequently executed while the set S4 contains code sequences which are the most often executed.

The generating means M6 is adapted to generate an optimized application NAP by optimizing the code sequences of the set S3 and setting the code sequences of the set S4 in a form that is not optimized. The generating means M6 may use a mechanism similar to that of the optimizer means M3.

The manager means M7 is adapted to trigger the generating means M6 when a preset event occurs. Thus the manager means M7 is able to launch the step of optimization of the application in a so-called dynamic mode. The preset event may be a number of running of the application AP, a date or specific command received from a server for example.

The decompressing means M9 is adapted to decompress the optimized application NAP for generating the application AP by using the same convention as the generating means M6. Preferably, the decompressing means M9 is able to decompress an isolated code sequence.

Advantageously, the optimizer means M3 and the generating means M6 use the same algorithm for reducing the size of the code sequence and the decompressing means M8 and M9 may use the same algorithm for inflating the size of the code sequence. If the decompressing means M8 and M9 behave differently, then the device D2 may comprise the decompressing means M8 in order to be able to decompress the optimized application CAP.

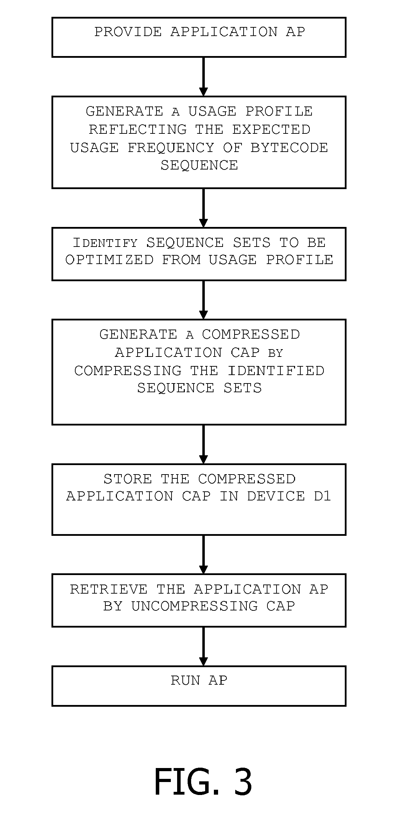

**Figure 3** depicts an example of flowchart of the method for optimizing the application AP according to the static mode of the invention.

Referring to the application AP and the device D1 of Figure 1, the application AP is provided to the computer machine MA at a first step. Typically, the application AP has been developed and is stored into the computer MA which may be a server for example.

At a second step, a usage profile UP is generated for the application AP. The usage profile UP may be either manually generated or built by a software tool. The usage profile UP reflects the expected usage frequency of the code sequences of the executable part of the application AP.

At a third step, a first set of code sequences to be optimized is identified and a second set of code sequences that must remain unchanged is identified. These two sets are built by analyzing the content of the usage profile UP. The first set corresponds to the least frequently used code sequences. The second set corresponds to the most often used code sequences.

At a fourth step, an optimized application CAP is generated by optimizing the code sequences of said first set only. The code sequences of the second set are transformed in a form that is not optimized.

At a fifth step, the compressed application CAP is sent to the device D1 and stored into the device D1.

At a sixth step, the compressed application CAP is uncompressed in the device D1 for retrieving the initial application AP. Then the application AP is run into the device D1.

Advantageously, the code sequences are uncompressed on-the-fly during the execution of the application AP. Thus only the code sequences which are required for running an instance of the application AP are uncompressed.

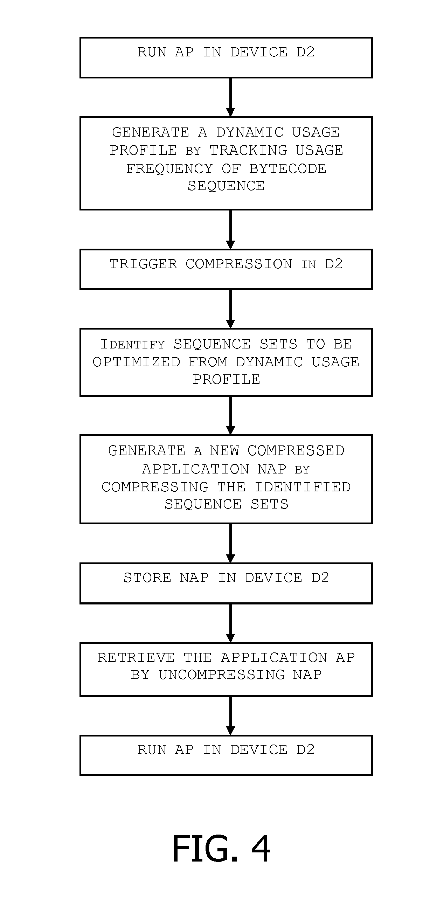

**Figure 4** depicts an example of flowchart of the method for optimizing the application AP according to the dynamic mode of the invention.

Referring to the optimized application CAP and the device D2 of Figure 2, the optimized application CAP is assumed to have been generated according to the static mode mechanism previously described. The optimized application CAP is stored in the device D2. The device D2 has a means able to retrieve the initial executable code of the application AP from the optimized application CAP.

The application AP is run into the device D2 at a first step.

At a second step, a dynamic usage profile DUP is generated for the application AP by tracking the usage frequency of the code sequences. The dynamic usage profile DUP reflects the measured usage frequency of the code sequences of the executable part of the application AP.

The dynamic usage profile DUP may be produced thanks to either a continuous tracking or by sampling the usage of the code sequences. The sampling option allows saving computer resources. The sampling option may be performed on at regular or random intervals.

At a third step, a new optimization of the application AP is triggered. For example, a preset event may trigger the new optimization. The preset event may the fact that a counter of application AP running reaches a specific threshold. The preset event may be the receipt by the device D2 of a command requesting a new optimization of the application AP.

Advantageously, when the preset event occurs, a flag may be set to indicate that the re-optimization must be performed. Then when the device D2 detects a free time slot, the re-optimization may be launched.

At a fourth step, a set S3 of code sequences to be optimized is identified and a set S4 of code sequences that must remain unchanged is identified. The sets S3 and S4 are built by analyzing the content of the dynamic usage profile DUP. The set S3 corresponds to the least frequently used code sequences. The set S4 corresponds to the most often used code sequences.

At a fifth step, a new optimized application NAP is generated by optimizing the code sequences of the set S3 only. The code sequences of the set S4 are modified in a form that is not optimized (either decompressed or kept unchanged if not already compressed).

At a sixth step, the new compressed application NAP is stored into the device D2. In other words, the application AP is stored in the device D2 in the form of the new compressed application NAP.

At a seventh step, the new compressed application NAP is uncompressed in the device D2 for retrieving the initial application AP. Then the application AP is run into the device D2.

Advantageously, the code sequences are uncompressed (from the new optimized application NAP) on-the-fly during the execution of the application AP. Thus only the code sequences which are required for running the application AP are uncompressed. It is to be noted that the code sequences executed when running the application AP may depend on the execution context or on the input parameters.

Alternatively, the application AP may be downloaded into the device D2 in the form that is not optimized. Thus the application AP is stored in the form of the initial application AP in the device D2. Then the dynamic mode mechanism allows generating an optimized application NAP directly from the initial application AP. (i.e. without the intermediate form of CAP).

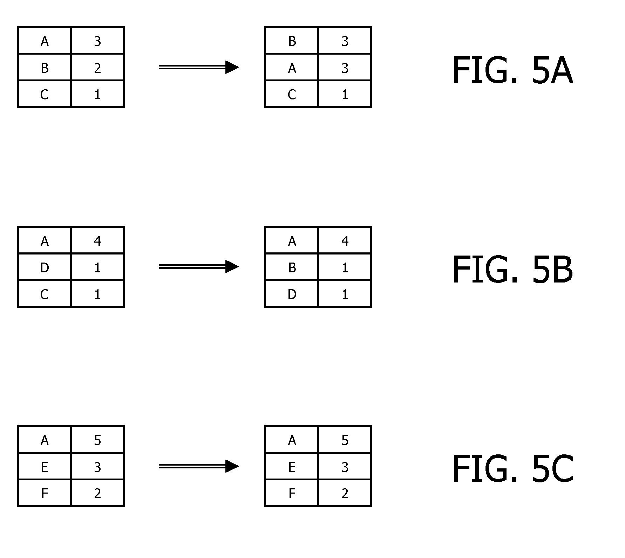

**Figures 5A, 5B and 5C** depict examples of a table for tracking the usage frequency of code sequences according to the invention.

The table aims at containing the usage statistics of the most oft-used specific bytecodes. In other words, the code sequences (i.e. pattern) are tracked through their corresponding specific bytecode. This table is initially populated by the most recently used specific bytecodes. In the example of Figures 5A, 5B and 5C, the table is limited to 3 entries only in order to comply with memory size constraints. Once the table is full the next specific bytecode used will trigger one of the three following sequences. If the specific bytecode already has an entry in the usage table, then its counter will be incremented. If this counter becomes equal to another existing entry's counter, this updated entry would be ranked higher because it was more recently used. If there is no corresponding existing entry and there is at least one entry with a counter of one, the least recent counter-equals-one entry will be replaced. If there is no existing entry and all entries in the table have counters of more than one, then no changes will be made to the table.

In the three example of Figures 5A, 5B and 5C, the code sequence (i.e. pattern) "B" is assumed to be run and tracked. According to Figure 5A, the initial state of the table is as follow: the pattern "A" has already been tracked 3 times, the pattern "B" has already been tracked 2 times and pattern "C" has already been tracked 1 time. Since the pattern "B" is assumed to be tracked once more and is the more recent tracked pattern, the pattern "B" is placed on the top of the table with a counter set to 3.

According to Figure 5B, the initial state of the table is as follow: the pattern "A" has been tracked 4 times, the pattern "D" has been tracked 1 time and pattern "C" has been tracked 1 time. Since the pattern "B" is assumed to be tracked once more and is the more recent tracked pattern, the pattern "B" is set with a counter set to 1 and placed at the highest rank of the pattern having a counter equal to 1. The oldest one-counter pattern "C" has been removed from the table.

According to Figure 5C, the initial state of the table is as follow: the pattern "A" has been tracked 5 times, the pattern "E" has been tracked 3 time and pattern "F" has been tracked 2 time. Since the pattern "B" is assumed to be tracked once and the table is already full with pattern having higher counters, the pattern "B" is not taken into account into the table. There is no change in the table.

Alternatively, the table may be managed as a database, a file, a list or any relevant container.

Advantageously, a calculation to determine the feasibility of the re-optimization is done when a new optimization of the application AP is triggered. By counting the to-be-expanded specific bytecodes and the to-be-compressed code sequences in the application, it can be determined if there is sufficient space for re-optimization. If re-optimization is not possible, then the re-optimization is delayed or cancelled.

The invention is well-suited for managing applications where usage patterns change significantly over time. Such applications would have a long usage cycle. One straightforward example would be a game with many different levels. Since different levels would entail different tasks to be completed, usage of the application would naturally change as well. Another possible example could be an application that tracks personal expenses and maybe perform some analysis/recommendation. The usage pattern for the application would presumably change with the user's spending habits.

## Claims

1. A **method** for optimizing an application (AP) having an executable part (X1) comprising a plurality of code sequences,
**characterized in that** the method comprises the following steps:
- providing a usage profile (UP) which reflects the expected frequency of use of said plurality of code sequences,
- analyzing the usage profile (UP) and identifying a first set of code sequences which are the least used and a second set of code sequences that are most often used,
- generating an optimized application (CAP) by optimizing the code sequences of said first set and setting the code sequences of said second set in a form that is not optimized.

2. A method according to claim 1, wherein the method comprises the further steps:
- installing the optimized application (CAP) in a device (D2),
- producing a dynamic usage profile (DUP) by tracking the frequency of use of said code sequences during the application (AP) running in the device (D2),
- analyzing the dynamic usage profile (DUP) and identifying a third set (S3) of sequences which are the least used and a fourth set (S4) of sequences that are most often used,
- generating a new optimized application (NAP) by optimizing the code sequences of said third set (S3) and setting the code sequences of said fourth set (S4) in a form that is not optimized,
- storing said new optimized application (NAP) in the device (D2).

3. A method according to claim 1 or claim 2, wherein the code sequence optimizing is performed via a code sequence compressing or a code sequence compacting.

4. A method according to claim 2, wherein the dynamic usage profile (DUP) is produced by sampling the use of said plurality of code sequences.

5. A method according to claim 2, wherein the dynamic usage profile (DUP) is produced by tracking a subset of said plurality of code sequences.

6. A **system** (SY) comprising an application (AP) having an executable part (X1) comprising a plurality of code sequences,
**characterized in that** the system (SY) comprises:
- a generator means (M1) adapted to generate a usage profile (UP) which is intended to reflect the expected frequency of use of said plurality of code sequences when said application (AP) is run,
- an identifying means (M2) adapted to analyze the usage profile (UP) and to identify a first set of code sequences which are the least used and a second set of code sequences that are most often used,
- an optimizer means (M3) adapted to generate an optimized application (CAP) by optimizing the code sequences of said first set and setting the code sequences of said second set in a form that is not optimized.

7. A system (SY) according to claim 6, wherein the system (SY) comprises:
- a tracking means (M4) adapted to produce a dynamic usage profile (DUP) reflecting the frequency of use of said plurality of code sequences when the application (AP) is run,
- an analyzing means (M5) adapted to identify a set (S3) of code sequences which are the least used and a set (S4) of code sequences that that are most often used according to the dynamic usage profile (DUP),
- a generating means (M6) adapted to generate a new optimized application (NAP) by optimizing the code sequences of the set (S3) of code sequences to be optimized.

8. A **device** (D2) able to run an application (AP) having an executable part (X1) comprising a plurality of code sequences,
**characterized in that** the device (D2) comprises:
- a tracking means (M4) adapted to produce a dynamic usage profile (DUP) reflecting the frequency of use of said plurality of code sequences when the application (AP) is run,
- an analyzing means (M5) adapted to analyze the dynamic usage profile (DUP) and to identify a set (S3) of code sequences which are the least used and a set (S4) of code sequences that are most often used,
- a generating means (M6) adapted to generate a optimized application (NAP) by optimizing the code sequences of the set (S3) of code sequences which are infrequently used and setting the code sequences of said set (S4) of code sequences that are often used in a form that is not optimized.

9. A device (D2) according to claim 8, wherein the device (D2) comprises:
- a manager means (M7) adapted to trigger the generating means (M6) when a preset event occurs.
